Europäisches Patentamt

European Patent Office

Office européen des brevets

(11) Veröffentlichungsnummer: **0 407 806 A2**

# EUROPÄISCHE PATENTANMELDUNG

(21) Anmeldenummer: 90112112.9

(22) Anmeldetag: 26.06.90

(51) Int. Cl.⁵: **B60S 5/00**

(30) Priorität: **10.07.89 DE 3922994**
**30.01.90 DE 4002689**
**01.06.90 DE 4017660**

(43) Veröffentlichungstag der Anmeldung:
**16.01.91 Patentblatt 91/03**

(84) Benannte Vertragsstaaten:
**AT BE CH DE ES FR GB IT LI NL SE**

(71) Anmelder: **Deutsche Tecalemit GmbH**
**Postfach 12 01 28**
**D-4800 Bielefeld 12(DE)**

(72) Erfinder: **Plehn, Reinhard**
**Paul-Keller-Weg 6**
**W-4815 Schloss Holte-Stukenbrock(DE)**
Erfinder: **Temme, Ulrich**
**Turmfalkenweg 4a**
**W-4815 Schloss Holte-Stukenbrock(DE)**
Erfinder: **Brack, Friedrich**
**Waldstr. 7**
**W-4904 Enger(DE)**
Erfinder: **Brückner, Rainer**
**Dahlienweg 9**
**W-4800 Bielefeld 12(DE)**
Erfinder: **Huber, Dr. P. Reinhold**
**Hürdenweg 7**
**W-4800 Bielefeld 12(DE)**

(54) **Gerät zur Abgabe ungebrauchter und zur Vorwahl, Messung, Anzeige, Aufnahme und Lagerung gebrauchter Bremsflüssigkeiten.**

(57) Dieses Gerät wird beim Service an hydraulischen Bremsanlagen oder einzelnen Bremskreisen von Kraftfahrzeugen eingesetzt.

Seine Abgabeeinheit (1), welche die ungebrauchte Bremsflüssigkeit in das Bremssystem (17) drückt, besteht aus einer Förderpumpe (2), einem Antriebsmotor (3), einem Vorratsbehälter (4), einer Verbindungsleitung (7), einer Absperreinrichtung (30), einem Stutzen (8), einem Feuchtigkeitsfilter (29) und weiteren hydraulischen Elementen (5, 6 usw.).

Seine Aufnahmeeinheit (9), in welcher die gebrauchte Bremsflüssigkeit aus dem Bremssystem (17) vorgewählt, volumetrisch gemessen, angezeigt, aufgenommen und gelagert wird, besteht aus
- mindestens einem Meßwerk (13), bei mehreren Meßwerken (13.1 und 13.2) sind diese hydraulisch parallel geschaltet und an je einen Bremskreis seriell angeschlossen, je mit einer Mengen-Vorwahl/-Anzeige (14.1 und 14.2) und einer Rückstelleinrichtung (15.1 und 15.2),
- den zugehörigen Verbindungsleitungen (10.1 und 10.2), zusammengeführt zu einer Sammelleitung (18), den Anschlußstutzen (11.1 und 11.2) und den zugehörigen Absperreinrichtungen (12.1 und 12.2),
- dem Mehrweg-Sammelbehälter (19) mit einem Entsorgungsanschluß (20), in den die Sammelleitung (18) sowie eine Verbindungsleitung (23) von einem Tropfbecher (22) münden, und dessen Sicherungseinrichtung (58).

Das Gerät ist als eine Baueinheit (24) ausgebildet.

EP 0 407 806 A2

Figur 1

# GERÄT ZUR ABGABE UNGEBRAUCHTER UND ZUR VORWAHL, MESSUNG, ANZEIGE, AUFNAHME UND LAGERUNG GEBRAUCHTER BREMSFLÜSSIGKEITEN.

Die Erfindung bezieht sich auf ein Gerät zur Abgabe ungebrauchter und zur Vorwahl Messung, Anzeige, Aufnahme und Lagerung gebrauchter Bremsflüssigkeiten; dabei besteht im konkreten Einsatzfall eine serielle hydraulische Schaltung der Abgabeeinrichtung für die gebrauchte Bremsflüssigkeit, der Bremsanlage sowie der Aufnahmeeinrichtung der gebrauchten Bremsflüssigkeit. Geräte dieser Art ermöglichen den Austausch, die Ergänzung oder die Entlüftung von Bremsflüssigkeiten in hydraulischen Bremsanlagen von Kraftfahrzeugen.

Einrichtungen zur Abgabe von ungebrauchten Bremsflüssigkeiten, bestehend aus einer Förderpumpe mit einem Antriebsmotor, einem Behältnis und einer Schlauchleitung mit einem Stutzen zum Anschluß an die hydraulische Bremsanlage eines Kraftfahrzeugs sind bekannt. Gleichzeitig wird beim eigentlichen Handhabungsvorgang am anderen Ende dieser Anlage eine einfache Einheit angeschlossen, in welcher die hierbei herausgedrückte, gebrauchte Bremsflüssigkeit aufgefangen wird; diese besteht aus einer Schlauchleitung mit einem Stutzen, einer kleinen, offenen, durchsichtigen Kunststoff-Flasche mit einer 100 cm$^3$-Meßskala.

Entsprechend den Vorschriften des Kraftfahrzeug-Herstellers wird nun die Abgabeeinrichtung solange betätigt, bis das vorgeschriebene Volumen - ohne Mengenvorwahl - in dem Gefäß erreicht ist, was anhand der Niveauunterschiede des Flüssigkeitsspiegels an der Meßskala - relativ ungenau - ersichtlich ist. Anschließend wird die gebrauchte Flüssigkeit in ein beliebiges Abfallgefäß geschüttet, das bislang nicht Bestandteil der o. a. Einrichtungen ist. In dieses Gefäß können auch andere Abfälle gelangen, u. a. durch die nicht sachgemäße Handhabung gebrauchte Altöle, Kühlflüssigkeiten, Kaltreiniger u. a. m.; sein Inhalt wird so zwangsläufig zum Sonderabfall mit wesentlich erhöhten Entsorgungskosten. Der derzeitige Umgang mit Bremsflüssigkeiten ist demnach wenig professionell gelöst, schon garnicht im Hinblick auf zeitgemäße Umwelterfordernisse.

Ausgehend von diesem Stand der Technik liegen der Erfindung die folgenden Aufgabenstellungen zugrunde:

1. Zwangsläufige und hinreichende Erfüllung der konkreten Forderungen des modernen Umweltschutzes

- absolut getrennte Sammlung und Lagerung gebrauchter Bremsflüssigkeiten (um sie einer kostengünstigen Wiederaufarbeitung - nicht dagegen einer Vernichtung, z. B. durch Verbrennung - zuzuführen).

2. Gerät als eine Bau- und Funktionseinheit

- Einstellmöglichkeit von Originalgebinden für ungebrauchte Bremsflüssigkeiten,
- Abgabe ungebrauchter Bremsflüssigkeiten,
- Vorwahl, Anzeige, volumetrische Messung gebrauchter Bremsflüssigkeiten,
- Aufnahme und Sammlung gebrauchter Bremsflüssigkeiten in einem austauschbaren Mehrweg-Behälter, mit einer Sicherung gegen unbefugtes Öffnen.

3. Reduzierung der Handhabungszeit
(ungefähr die Hälfte gegenüber der bisherigen Neubefüllung)

Eine Novität stellt hierbei der Aufbau und die hydro-mechanische Wirkart des Hubkolbenmeßwerks in Verbindung mit einer Mengen-Vorwahl und -Anzeige für gebrauchte Bremsflüssigkeiten - seriell hinter dem Bremskreis angeordnet - dar. Es besteht aus einem Kolben mit einem Zylinder, dessen Kolbenstange einseitig zur Hubanzeige und manuellen Betätigung herausgeführt wird. Im Kolben ist ein Rückschlagventil integriert, das gleichzeitig, bei der manuellen Rückführung des Kolbens in seine Startposition, mechanisch entsperrt und so eine Umfüllung der Bremsflüssigkeit im Zylinder bewirkt wird; die Pumpe ist bei diesem Umfüllvorgang abgeschaltet. Während des gesamten Ablaufs dient im 1. Schritt ein Quantum der gebrauchten Bremsflüssigkeit als Arbeitsmedium, gleichzeitig wird zwangsweise, bedingt durch die hydraulische Serienschaltung,

- vorgeschaltet ein identisches Quantum an ungebrauchter Bremsflüssigkeit in den Bremskreis abgegeben,
- nachgeschaltet ein identisches Quantum an gebrauchter Bremsflüssigkeit in den Sammelbehälter befördert;

dann erfolgt - zwischen zwei Arbeitsgängen bei abgeschalteter Pumpe - die manuelle Umfüllung. Hierbei wird das Quantum, das ursprünglich Arbeitsmedium war, zum entsorgungsbereiten Quantum; dieses wird im 2. Schritt (beim nächsten Arbeitsgang) in den Sammelbehälter befördert. Die Energien zur Absolvierung des 1. bzw. 2. Schrittes (1. bzw. 2. Abgabe) werden je durch die Betätigung der Pumpe (gemäß Druck mal Volumenstrom) aufgebracht. Oberbegrifflich handelt es sich demnach um ein einfach wirkendes, hydro-mechanisches Hubkolbenmeßwerk mit einem einstellbaren Hub und Anzeige, sowie einer manuellen Hubrückstellung zur volumetrischen indirekten Dosierung ungebrauchter Bremsflüssigkeiten.

Die Mengen-Vorwahl und -Anzeige sowie die Betätigung des Geräts kann auch für die gesamte Bremsanlage, bestehend aus mehreren Kreisen, hintereinander summierend erfolgen. In diesem Fall wird die gesamte vorgeschriebene Inhaltsmenge der Kreise, die mit einem Meßwerk bedient werden sollen, addiert und auf der Meßskala angezeigt. Hierbei erfolgt keine einzelne Rückstellung des Meßwerks nach jedem Vorgang, sondern nur einmalig nach der Beendigung der Verrichtungen am ·Kraftfahrzeug, die mit diesem Strang vorgenommen werden sollen. Weiter können mit diesem Gerät Entlüftungsvorgänge durchgeführt werden; hierbei müssen die entsprechenden Stutzen angeschlossen, die Pumpe betätigt und gleichzeitig die Rückstelleinrichtung manuell geschaltet werden.

Nachstehend wird eine bevorzugte Ausführungsform anhand der Zeichnung und, darauf aufbauend, eine spezielle Variante beschrieben; weiter wird das Meßwerk erläutert. Gezeigt wird in

Figur 1 der hydraulische serielle Schaltplan der Erfindung für zwei parallelgeschaltete Bremskreise mit einem Eingang für die ungebrauchte und zwei Ausgängen der Stränge für die gebrauchte Bremsflüssigkeit (Arbeitsschaltung);

Figur 2 die Ausgestaltung eines Meßwerks gemäß Fig. 1 (Ruhezustand);

Figur 3 die Vorder- und Seitenansicht eines elektrisch betriebenen, fahrbaren Geräts, das gemäß Figur 1 als eine Baueinheit ausgebildet ist (Ruhezustand);

Figur 4 analog Figur 1 den hydraulischen Schaltplan in einer speziellen Variante einer zusätzlichen Absaugmöglichkeit der gebrauchten Bremsflüssigkeit aus dem Bremssystem durch eine Elektropumpe, deren Drehsinn für diesen Vorgang umkehrbar ist (Arbeitsschaltung Befüllen);

Figur 5 die Vorder- und Seitenansicht eines fahrbaren Geräts ausschließlich zur volumetrischen Aufnahme von gebrauchten Bremsflüssigkeiten für zwei Bremskreise, das, abgleitet aus Figur 1, als eine Baueinheit ausgebildet ist (Ruhezustand).

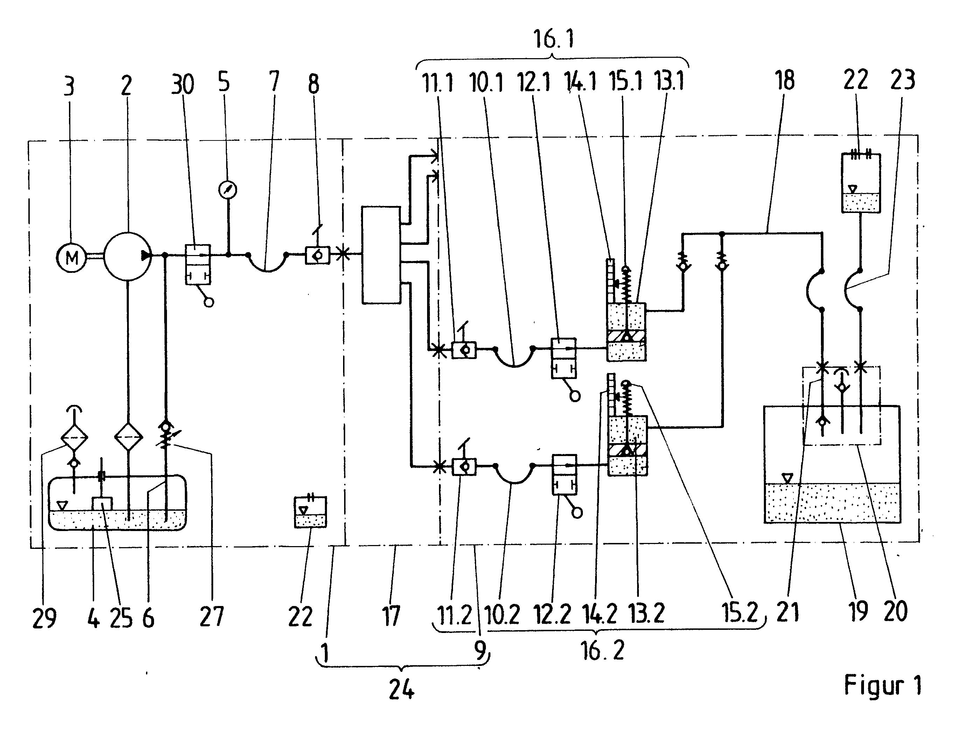

In den Zeichnungen sind gleiche oder einander entsprechende Bauteile beider Stränge (16.1 oder 16.2) mit denselben Haupt-Bezugszeichen gekennzeichnet. Zunächst zum Hydraulikplan gemäß Figur 1.

Der serielle Anschluß an die Hydraulik des Bremssystems (17) erfolgt eintrittsseitig für die ungebrauchte Bremsflüssigkeit am Stutzen (8) der Abgabeeinheit (1); diese besteht aus einer Förderpumpe (2), dem Antriebsmotor (3), dem Vorratsbehälter (4) mit einem Niveauanzeiger (25), einem Manometer (5), einer Überströmleitung (6) mit Überströmventil (27) und einer Verbindungsleitung (7) mit einer Absperreinrichtung (30); ein Feuchtigkeitsfilter (29) sorgt für die feuchtigkeitsarme Belüftung des Vorratsbehälters (4). Zusätzlich existiert ein Tropfbecher (22), in welchem im Ruhezustand der Stutzen (8) steckt. Die Aufnahmeeinheit (9) für die gebrauchte Bremsflüssigkeit besitzt zur seriellen Kupplung an zwei Kreise des Bremssystems (17) der zwei parallelgeschalteten Stränge (16.1 und 16.2) die Anschlußstutzen (11.1 und 11.2) mit den Verbindungsleitungen (10.1 und 10.2). Nachgeschaltet ist je eine manuelle Absperreinrichtung (12.1 und 12.2), je ein Meßwerk (13.1 und 13.2) mit einer Mengen-Vorwahl/-Anzeige (14.1 und 14.2) und einer Rückstelleinrichtung (15.1 und 15.2), die ihrerseits in die Sammelleitung (18) zusammengeführt werden; diese führt zu dem austauschbaren Mehrweg-Sammelbehälter (19). Ein Entsorgungsanschluß (20) beinhaltet den hydraulischen Eingang (21) und den Anschluß der Verbindungsleitung (23) zum Tropfbecher (22), in welchem im Ruhezustand des Geräts die beiden Anschlußstutzen (11.1 und 11.2) stecken.

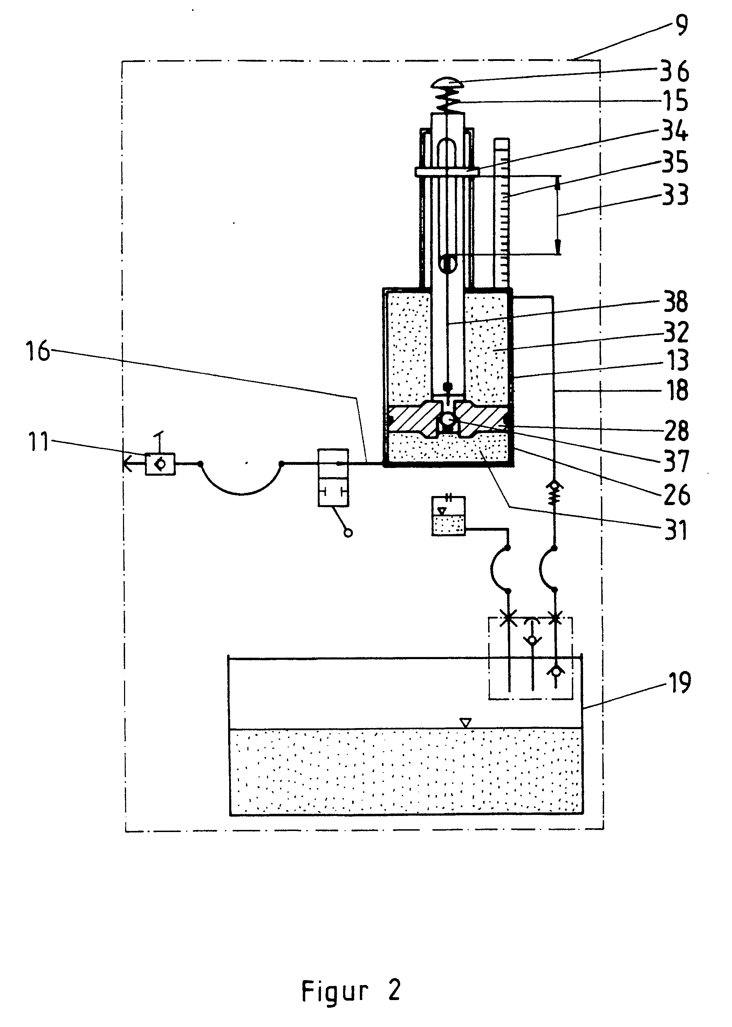

Die Meßwerke (13.1 und 13.2) sind in der Fig. 2 näher erläutert. Insgesamt ist das Gerät, bestehend aus einer Abgabeeinheit (1) und der Aufnahmeeinheit (9), als eine Baueinheit (24) aufgebaut.

In der Figur 2 ist ein Meßwerk (13) als integrierter Bestandteil der Aufnahmeeinheit (9) betriebsbereit dargestellt. Nachdem der Anschlußstutzen (11) an das Bremssystem angekuppelt und das gesamte Gerät nach dem Einschalten der Förderpumpe in Betrieb genommen wurde - das Bremssystem und die Förderpumpe sind nicht dargestellt, siehe Figur 1 - tritt die gebrauchte Bremsflüssigkeit über den Strang (16) in den Arbeitsraum (26), der gleichzeitig das Dosiervolumen bestimmt, ein; der Kolben (28) des Meßwerks (13) befindet sich hierbei zunächst in seiner unteren Totlage. Durch die Druckwirkung des hydraulischen Arbeitsmediums (31) "gebrauchte-Bremsflüssigkeit" wird er in seine obere Totlage befördert; gleichzeitig wird das oberhalb des Kolbens befindliche Volumen (32) über die Leitung (18) in den Mehrweg-Sammelbehälter (19) gedrückt. Die Voreinstellung des Kolbenhubs (33), der das Volumen (32) bestimmt, erfolgt über den Einstellring (34); auf einer Skala (35) wird das Volumen (32) angezeigt. Der Abgabevorgang ist damit beendet und das Gerät wird abgeschaltet.

Nun erfolgt die manuelle Umschichtung des Volumens indem der Kolben (28) aus seiner oberen Totlage in die untere Totlage gebracht wird. Hierbei wird der Knopf (36) der Rückstelleinrichtung (15) nach unten gedrückt, gleichzeitig wird durch die Öffnungseinrichtung (38) das Umfüllventil (37) geöffnet, so daß die Flüssigkeit umgeschichtet werden kann. Nach Erreichen der unteren Totlage des Kolbens (28) ist das Meßwerk (13) für den nächsten Abgabevorgang betriebsbereit.

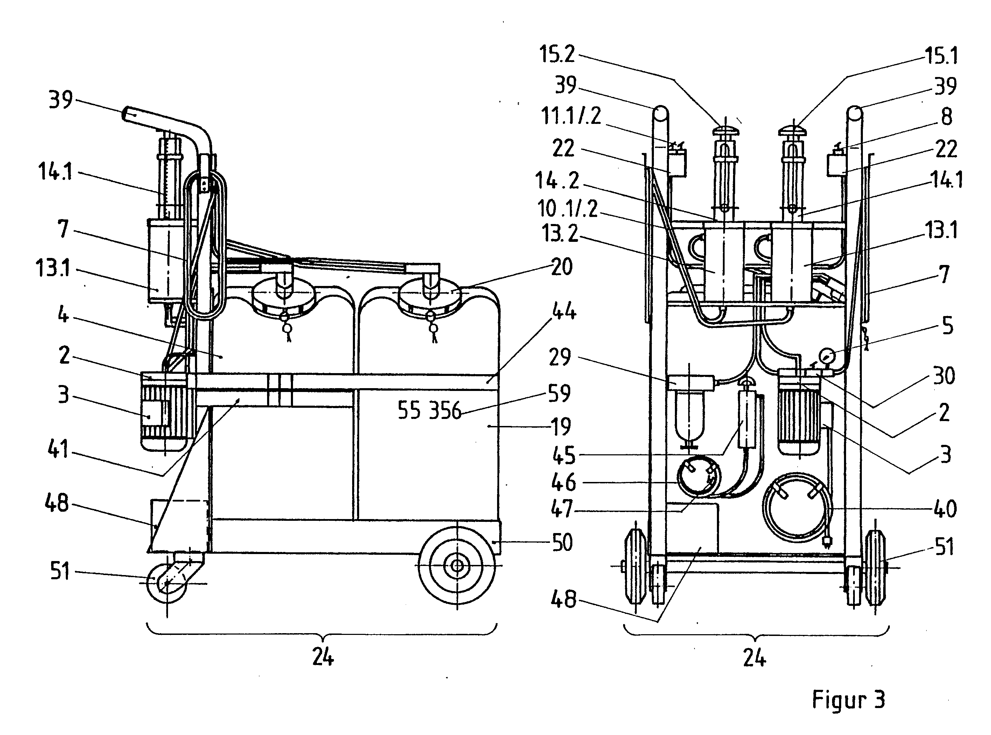

In der Figur 3 ist das Gerät als eine komplette Baueinheit (24) in seiner bevorzugten Ausführungsform im betriebsbereiten Ruhezustand dargestellt, die insbesondere fahrbar ist; seine wesentlichen Baugruppen bestehen aus
- dem Fahrwerk (50) mit Rädern (51) und zwei Handgriffen (39);
- der Förderpumpe (2), dem elektrischen Antriebsmotor (3) und dem Stromkabel (40)
- dem Meßwerk (13.1 und 13.2) mit der Mengen-Vorwahl und -Anzeige (14.1 und 14.2), sowie der Rückstelleinrichtung (15.1 und 15.2), der Absperreinrichtung (30), dem Manometer (5), der Verbindungsleitung (7) und dem Stutzen (8);
- dem Vorratsbehälter (4) zum Mehrwegeinsatz für ungebrauchte Bremsflüssigkeiten mit einer Befestigungsvorrichtung (41), sowie den entsprechenden Anschlüssen, insbesondere aber, zu seiner feuchtigkeitsarmen Belüftung, einem Feuchtigkeitsfilter (29);
- dem Mehrweg-Sammelbehälter (19) für gebrauchte Bremsflüssigkeiten, dem Entsorgungsanschluß (20), der Befestigungsvorrichtung (44), dem Anschlußstutzen (11.1 und 11.2) und der Verbindungsleitung (10.1 und 10.2);
- die Tropfbecher (22) dienen zur Aufnahme der Stutzen (8 bzw. 11.1 und 11.2) im Ruhezustand des Geräts, um abtropfende Bremsflüssigkeiten umweltschonend aufzufangen;
- als Gerätezubehör dient eine manuell betätigte Absaugpumpe (45) um beispielsweise den Sammelbehälter der Bremsflüssigkeit am Fahrzeug auch absaugen zu können, mit den passenden Leitungen (46) und Stutzen (47) zum Anschluß an die entsprechenden Stellen des Fahrzeugs bzw. Geräts, bzw. ein Testgerät (48), um den chemisch-physikalischen Zustand der Bremsflüssigkeit in der Bremsanlage ad hoc überprüfen zu können.

Der Mehrweg-Sammelbehälter (19), der teil- oder volltransparent aus thermoplastischem Kunststoff ausgebildet ist, trägt die amtliche Abfallschlüsselnummer (59), zum Beispiel "55 356" für Glykolether (Wassergefährdungskategorie WGK 1).

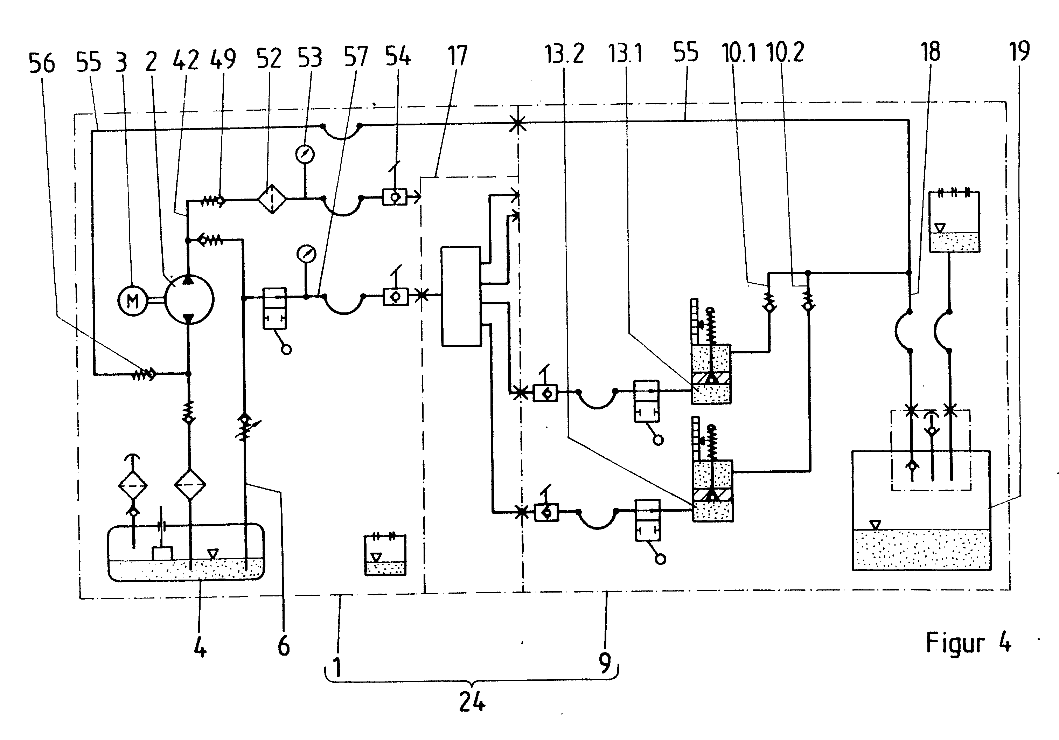

Die Figur 4 besitzt denselben Grundaufbau wie in Fig. 1 beschrieben; als zusätzliche Funktion der gesamten Baueinheit (24) ist eine Absaugmöglichkeit der gebrauchten Bremsflüssigkeit aus dem Bremssystem (17) als Saugleitungsstrang (42) integriert. Das ganze Bremssystem (17) wird hierbei durch die Saugwirkung der Förderpumpe (2) leergepumpt und anschließend, mit derselben Förderpumpe (2), volumetrisch befüllt. Erzielt wird dies durch die spezielle Variante der Förderpumpe (2), die durch einen Antriebsmotor (3) elektrisch angetrieben wird, dessen Drehsinn für den Absaugvorgang umschaltbar ist: aus der bisherigen hydraulischen Druckleitung wird eine Saugleitung, aus der bisherigen Saugleitung wird eine Druckleitung; dementsprechend erfolgt die zusätzliche hydraulische Schaltung.

Der Saugleitungsstrang (42) besteht aus den Elementen Rückschlagventil (49), Saugfilter (52), Unterdruckmanometer (53) und Saugstutzen (54). Der hinter der Förderpumpe (2) liegende Druckleitungsstrang (55) der gebrauchten Bremsflüssigkeit, parallel zu den Verbindungleitungen (10.1 und 10.2) angeordnet, besitzt mindestens ein Rückschlagventil (56) und mündet in die Sammelleitung (18), die ihrerseits zum Mehrweg-Sammelbehälter (19) führt.

Anschließend wird der Saugleitungsstrang (42) vom Bremssystem (17) abgekuppelt, der Abgabestrang (57) für die ungebrauchte Bremsflüssigkeit angekuppelt, der Drehsinn der Förderpumpe (2) umgekehrt und der Ablauf mittels der Meßwerke (13.1 und 13.2) erfolgt in der zuvor beschriebenen Art und Weise. Der Vorratsbehälter (4) und die Überströmleitung (6) führen hierbei die ungebrauchte Bremsflüssigkeit. Die Baueinheit (24) besteht aus der Abgabeeinheit (1) und der Aufnahmeeinheit (9).

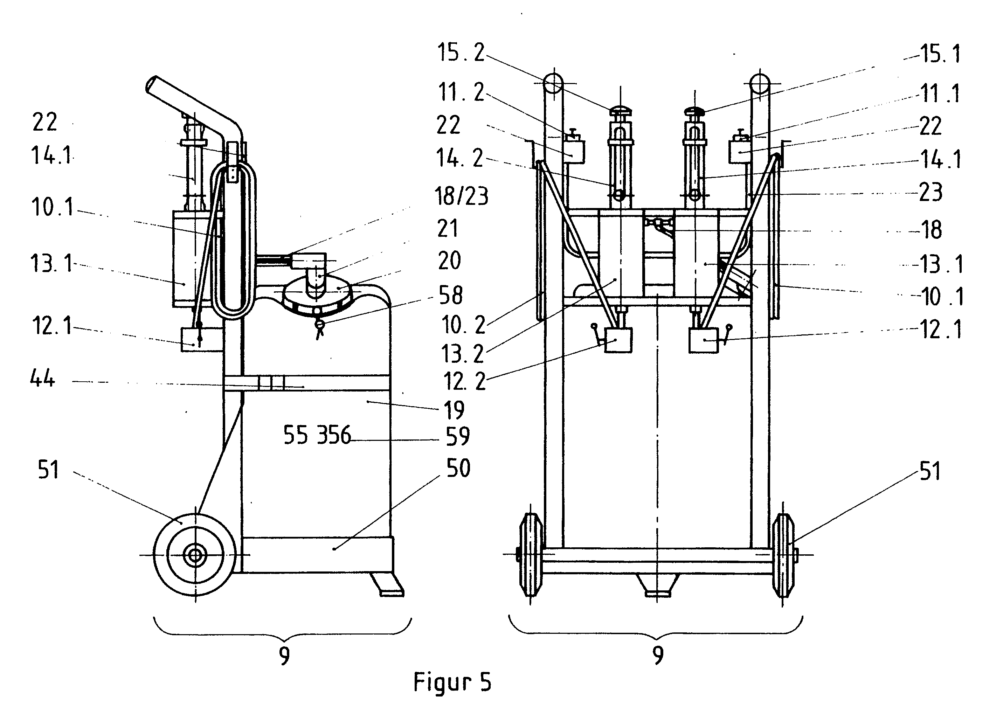

Die Figur 5 bezieht sich ausschließlich auf die Aufnahmeeinheit (9) für gebrauchte Bremsflüssigkeiten aus zwei Bremskreisen gemäß des hydraulischen Schaltplans nach Figur 1; die Energie aufbringung zur Betätigung der Aufnahmeeinheit (9) erfolgt von einer externen Abgabeeinheit (1), die nicht Gegenstand dieses Lösungsweges ist.

Sie besteht aus einem Fahrwerk (50) mit zwei Rädern (51), den Anschlußstützen (11.1 und 11.2) zum Anschluß an je einen Bremskreis des Fahrzeugs, die Verbindungsleitungen (10.1 und 10.2), den Meßwerken (13.1 und 13.2) mit der Mengen-Vorwahl und -Anzeige (14.1 und 14.2), der Rückstelleinrichtung (15.1 und 15.2), der Absperreinrichtung (12.1 und 12.2) und der Sammelleitung (18), sowie dem Mehrweg-Sammelbehälter (19) mit der Abfallschlüsselnummer (59), dem Entsorgungsanschluß (20), der Verbindungsleitung (23), dem Tropfbecher (22) und einer Sicherungseinrichtung (58) des Entsorgungsanschlusses (20) zur Kontrolle unbefugten Öffnens.

**Bezugszeichen**

1 Abgabeeinheit
2 Förderpumpe
3 Antriebsmotor
4 Vorratsbehälter
5 Manometer
6 Überströmleitung
7 Verbindungsleitung
8 Stutzen
9 Aufnahmeeinheit
10.1 Verbindungsleitung 1
10.2 Verbindungsleitung 2
11.1 Anschlußstutzen 1
11.2 Anschlußstutzen 2

12.1 Absperreinrichtung 1
12.2 Absperreinrichtung 2
13.1 Meßwerk 1
13.2 Meßwerk 2
14.1 Mengen-Vorwahl/-Anzeige 1
14.2 Mengen-Vorwahl/-Anzeige 2
15.1 Rückstelleinrichtung 1
15.2 Rückstelleinrichtung 2
16.1 Strang 1
16.2 Strang 2
17 Bremssystem
18 Sammelleitung
19 Mehrweg-Sammelbehälter
20 Entsorgungsanschluß
21 Eingang, hydraulisch
22 Tropfbecher
23 Verbindungsleitung
24 Baueinheit
25 Niveauanzeiger
26 Arbeitsraum
27 Überströmventil
28 Kolben
29 Feuchtigkeitsfilter
30 Absperreinrichtung
31 Arbeitsmedium
32 Volumen
33 Kolbenhub
34 Einstellring
35 Skala
36 Knopf
37 Umfüllventil
38 Öffnungseinrichtung
39 Handgriff
40 Stromkabel
41 Befestigungsvorrichtung
42 Saugleitungsstrang
43 Fahrwerk
44 Befestigungsvorrichtung
45 Absaugpumpe
46 Leitung
47 Stutzen
48 Testgerät
49 Rückschlagventil
50 Fahrwerk
51 Rad
52 Saugfilter
53 Unterdruckmanometer
54 Saugstutzen
55 Druckleitungsstrang
56 Rückschlagventil
57 Abgabestrang
58 Sicherungseinrichtung
59 Abfallschlüsselnummer

**Ansprüche**

1. Gerät zur Abgabe ungebrauchter und zur Vorwahl, Messung, Anzeige, Aufnahme und Lagerung gebrauchter Bremsflüssigkeit,en beim Service von hydraulischen Bremssystemen (17) bei Kraftfahrzeugen, bestehend

aus einer Abgabeeinheit (1) für ungebrauchte Bremsflüssigkeiten, die

- eine Förderpumpe (2), einen Antriebsmotor (3), einen Vorratsbehälter (4), eine Verbindungsleitung (7), einen Stutzen (8) und ein Manometer (5) enthält,

sowie einer Auffangeinrichtung für gebrauchte Bremsflüssigkeiten, die

- ein kleinvolumiges Behältnis mit einer Meßskala, einer Verbindungsleitung (10) mit einem Anschlußstutzen (11) enthält,

dadurch, gekennzeichnet, daß

die Abgabeeinheit (1) für ungebrauchte Bremsflüssigkeiten, bestehend aus

- einer Förderpumpe (2), einem Antriebsmotor (3), einem Vorratsbehälter (4), einem Manometer (5) einer Überströmleitung (6) mit einem einstellbaren Überstömventil (27), einem FeuchtigkeitsfilteT (29) sowie einer Verbindungsleitung (7) mit einem Stutzen (8) und einer Absperreinrichtung (30),

und die Aufnahmeeinheit (9) für gebrauchte Bremsflüssigkeiten, bestehend aus

- je zwei hydraulisch parallel angeordneten Strängen (16.1 und 16.2), je mit einem einfach wirkenden, volumetrischen Meßwerk (13.1 und 13.2) mit einer Mengen-Vorwahl und -Anzeige (14.1 und 1,4.2) und einer Rückstelleinrichtung (15.1 und 15.2) , mit einer Verbindungsleitung (10.1 und 10.2), mit einem Anschlußstutzen (11.1 und 11.2) und mit einer Absperreinrichtung (12.1 und 12.2), mündend in eine Sammelleitung (18),

- einem Mehrweg-Sammelbehälter (19) mit einem Entsorgungsanschluß (20), in den die Sammelleitung (18) sowie eine Verbindungsleitung (23) von einem Tropfbecher (22) münden, und dessen Sicherungseinrichtung (58), als eine Baueinheit (24) ausgebildet sind.

2. Gerät nach Anspruch 1,
dadurch gekennzeichnet, daß
der Antriebsmotor (3) ein Elektromotor ist.

3. Gerät nach Anspruch 1,
dadurch gekennzeichnet, daß
der Antriebsmotor (3) ein Luftmotor ist.

4. Gerät nach Anspruch 1 und 2,
dadurch gekennzeichnet, daß
die Förderpumpe (2) eine Zahnradpumpe ist.

5. Gerät nach Anspruch 1 und 3,
dadurch gekennzeichnet, daß
die Förderpumpe (2) eine Kolbenpumpe ist.

6. Gerät nach einem oder mehreren der Ansprüche 1 bis 5,
dadurch gekennzeichnet, daß
die Baueinheit (24) mit Rädern (51), Rollen o. dgl. fahrbar ausgebildet ist.

7. Gerät nach einem oder mehreren der Ansprüche 1 bis 6,
dadurch gekennzeichnet, daß
der Vorratsbehälter (4) durch eine Befestigungsvorrichtung (41) gehaltert ist.

8. Gerät nach einem oder mehreren der Ansprüche 1 bis 7,
dadurch gekennzeichnet, daß
der Mehrweg-Sammelbehälter (19) durch eine Befestigungsvorrichtung (44) gehaltert ist.

9. Gerät nach einem oder mehreren der Ansprüche 1 bis 8,
dadurch gekennzeichnet, daß
an dem Fahrwerk (50) ein Testgerät (48) angeordnet ist.

10. Gerät nach einem oder mehreren der Ansprüche 1 bis 9,
dadurch gekennzeichnet, daß
an dem Fahrwerk (50) eine Absaugpumpe (45), versehen mit Leitungen (46) und Stutzen (47), angeordnet ist.

11. Gerät nach einem oder mehreren der Ansprüche 1 bis 10,
dadurch gekennzeichnet, daß
das Meßwerk (13) einen Kolben (28), in dem ein Umfüllventil (37) angeordnet ist, eine Öffnungseinrichtung (38), eine Rückstelleinrichtung (15) und einen Knopf (36), sowie einen Einstellring (34) und eine Skala (35) besitzt.

12. Gerät nach einem oder mehreren der Ansprüche 1 bis 11,
dadurch gekennzeichnet, daß
die Abgabeeinheit (1) einen zum Abgabestrang (57) parallel angeordneten Saugleitungsstrang (42) besitzt.

13. Gerät nach einem oder mehreren der Ansprüche 1 bis 12,
dadurch gekennzeichnet, daß
im Saugleitungsstrang (42) ein Saugstutzen (54), ein Unterdruckmanometer (53), ein Saugfilter (52) und ein Rückschlagventil (49) angeordnet ist.

14. Gerät nach einem oder mehreren der Ansprüche 1 bis 13,
dadurch gekennzeichnet, daß
der Antriebsmotor (3) der Abgabeeinheit (1) als ein drehrichtungs-umschaltbarer, Einphasen-Asynchronelektromotor mit einem Betriebskondensator ausgebildet ist.

15. Gerät nach einem oder mehreren der Ansprüche 1 bis 14,
dadurch gekennzeichnet, daß
die Abgabeeinheit (1) einen Druckleitungsstrang (55) mit einem Rückschlagventil (56) besitzt, der in die Sammelleitung (18) mündet und seriell hinter dem Saugleitungsstrang (42) und der Förderpumpe (2) angeordnet ist.

16. Gerät nach einem oder mehreren der Ansprüche 1, 8 und 11,
dadurch gekennzeichnet, daß
die Aufnahmeeinheit (9) mit mindestens einem Meßwerk (13) mit Rädern (51), Rollen o. dgl. fahrbar ausgebildet ist.

17. Gerät nach einem oder mehreren der Ansprüche 1 bis 16,
dadurch gekennzeichnet, daß
der Mehrweg-Sammelbehälter (19) teil- oder volltransparent aus thermoplastischem Kunststoff ausgebildet ist und die amtlichen Kennzeichnungen des Behälters (19) und/oder seines Inhalts, der gebrauchten Bremsflüssigkeit mit der Abfallschlüsselnummer (59), trägt.

Figur 1

Figur 2

Figur 3

56  55  3  2  42  49  52  53  57  54  17  13.2  13.1  55  10.1  10.2  18  19

EP 0 407 806 A2

4  6  1  9

24

Figur 4

Figur 5